# EUROPÄISCHE PATENTSCHRIFT

(11) **EP 0 566 984 B1**
(45) Veröffentlichungstag und Bekanntmachung des Hinweises auf die Patenterteilung: **25.10.1995**
(21) Anmeldenummer: 93106111.3
(22) Anmeldetag: 15.04.1993
(51) Int. Cl.: B23C 5/22

(54) **Umfangsfräswendeplatte**
Milling cutter insert
Plaquette de coupe à fraiser

(30) Priorität: 23.04.1992 DE 4213284
(43) Veröffentlichungstag der Anmeldung: 27.10.1993
(73) Patentinhaber: Wilhelm Fette GmbH, D-21493 Schwarzenbek (DE)
(72) Erfinder: Bentjens, Bernd, W-2053 Schwarzenbek (DE); Oppelt, Klaus, W-2058 Lauenburg (DE)
(74) Vertreter: Patentanwälte Hauck, Graalfs, Wehnert, Döring, Siemons

(56) Entgegenhaltungen:
- EP-A- 0 035 848
- EP-A- 0 239 045
- EP-A- 0 298 285
- EP-A- 0 416 901

## Beschreibung

Die Erfindung bezieht sich auf eine Umfangsfräswendeplatte nach dem Oberbegriff des Patentanspruchs 1; siehe beispielsweise EP-A 0 416 901.

Umfangsfräswendeplatten sind seit langem bekannt. Sie bestehen aus einem generell prismatischen Körper mit einer planen Auflagefläche und mindestens einer Schneidkante,die der Schnittlinie zwischen einer Spanfläche und einer Freifläche an der Flanke der Wendeplatte entspricht. Die Wendeplatte wird fest in einem Werkzeughalter angeordnet dergestalt, daß die Schneidkante bei der Drehung des Werkzeughalters einen Kreis beschreibt. Üblicherweise wird die Wendeplatte in einem Winkel zur Drehachse (Axialwinkel) angeordnet. Der axiale Winkel hat einen unmittelbaren Einfluß auf die Standfestigkeit des Werkzeugs und die Haltbarkeit der Schneidkante. Ein weiches Schneiden wird bei einem relativ großen Axialwinkel erhalten.

Bei einem Axialwinkel ungleich Null und gerader Schneidkante kann kein exakter 90°-Winkel gefräst werden, weil voreilendes und nacheilendes Ende der Schneidkante nicht auf einer gemeinsamen Zylinderfläche liegen. Außerdem ändern sich über die Länge der Schneidkante Spanwinkel und Freiwinkel und der Spanwinkel ggf. dem Vorzeichen nach, was für eine qualitätvolle Bearbeitung unter Umständen nachteilig ist. Für eine optimale Standfestigkeit und eine gute Spanabfuhr sind indessen bestimmte Winkel vorzugeben, die aufgrund des beschriebenen Sachverhalts über die Länge der Schneidkante nicht beibehalten werden können. Aus den genannten Gründen wurden Wendeplattenfräswerkzeuge für die Umfangsschlichtbearbeitung nicht verwendet. Vielmehr wurden hierfür Fräser mit schraubenlinienförmigen Schneidkanten eingesetzt, die die erwähnten Anforderungen erfüllen. Derartige Fräswerkzeuge sind jedoch verhältnismäßig aufwendig, wenn sie mit auswechselbaren Messern versehen sind.

Aus der EP 0 392 730 und 0 392 729 sind Umfangsfräswendeplatten bekanntgeworden,mit denen versucht wird, die Nachteile herkömmlicher Wendeplatten zu umgehen. Der Schneidkante wird Kurvenform verliehen, und zwar als Schnittlinie eines ebenen Schnitts durch einen Zylinder. Der Winkel der Schnittebene entspricht dem Axialwinkel. Auf diese Weise ist gewährleistet, daß die Schnittkante auf einer Zylinderfläche liegt und mit dem Fräser ein exakter 90°-Winkel hergestellt werden kann.

Nach einem weiteren Merkmal des bekannten Fräswerkzeugs sind Spanfläche und Freifläche kontinuierlich kurviert dergestalt, daß sich entlang der Schneidkante ein konstanter Spanwinkel bzw. ein konstanter Freiwinkel ergeben.

Der Vorteil des bekannten Fräswerkzeugs besteht darin, daß ein relativ großer Axialwinkel gewählt werden kann. Außerdem lassen sich Span- und Freiwinkel bei positiver Schneidgeometrie optimieren. Nachteilig ist indessen, daß die Fertigung der bekannten Wendeplatten im spanlosen Formprozeß stattfindet, insbesondere durch Sintern. Die Herstellungsweise im Sinterprozeß ist für sich genommen nicht übermäßig aufwendig. Sie führt jedoch naturgemäß zu nicht zu vernachlässigenden Toleranzen, so daß die sogenannte Rundlaufgenauigkeit zu wünschen übrig läßt. Ferner erfordert jede Wendeplattengeometrie ein eigenes Formwerkzeug, auch wenn nur Spanwinkel oder Freiwinkel eine geringfügige Änderung erfahren. Bei unterschiedlichen Anforderungen ist daher eine große Anzahl von Formwerkzeugen vorzuhalten. Ein weiterer Nachteil besteht darin, daß gesinterte Wendeplatten nicht einem Beschichtungsprozeß nach dem PVD-Verfahren unterworfen werden können. Beschichtungsprozesse dieser Art zum Zwecke einer Oberflächenhärtung des Werkzeugs erfordern zumeist eine vorangehende Schleifbehandlung des Werkzeugs, welche gewünschte Wendeplatten nicht zulassen.

Der Erfindung liegt die Aufgabe zugrunde, eine einfach herzustellende Umfangs-Fräswendeplatte zu schaffen, mit der eine ähnlich hohe Bearbeitungsgüte wie beim Schlichtfräser erzielt werden kann.

Diese Aufgabe wird erfindungsgemäß gelöst durch die Merkmale des Patentanspruchs 1.

Die erfindungsgemäße Wendeplatte kann aus einem trapezoiden vorbearbeiteten, vorzugsweise plangeschliffenen gesinterten Rohling geformt werden. Der Rohling bzw. das Halbzeug hat in bekannter Weise eine plane Auflagefläche und eine annähernd plane der Auflagefläche gegenüberliegende Vorderfläche, wobei entscheidend ist, daß lediglich die an die Schneidkanten angrenzenden Flächenbereiche plan sind, während der Verlauf der Fläche im mittleren Bereich unwesentlich ist.

Die Erfindung geht von der Erkenntnis aus, daß ähnliche Ergebnisse wie mit kurvierten Span- und Freiflächen an der bekannten Wendeplatte erzielt werden, wenn die Spanfläche mittels einer vorzugsweise geraden sich im vom voreilenden zum nacheilenden öffnenden spitzen Winkel zur Längsmittelachse des Körpers verlaufenden Hohlkehle in der Vorderfläche geformt wird mit vom nacheilenden zum voreilenden Ende hin stetig zunehmender Tiefe.Eine derartige Hohlkehle läßt sich durch einen einfachen Schleifprozeß herstellen. Durch entsprechende Wahl der Schleifparameter läßt sich mithin der Spanwinkel an den Enden der Schneidkante willkürlich festlegen, so daß zum Beispiel am voreilenden und am nacheilenden Ende der Schneidkante bei gegebenem Axialwinkel gleiche Werte erhalten werden. Es versteht sich,daß der Spanwinkel zwischen den Enden nicht exakt die gleichen Werte annehmen kann. Hierzu würde es eines "Dralls" der Spanfläche bedürfen, wie er aus dem oben beschriebenen Stand der Technik an sich bekannt ist. Die durch die erfindungsgemäße Maßnahme erzielbare Formgebung der Wendeplatte im Schneidkantenbereich ist mithin eine Annäherung an die geometrischen Verhältnisse der bekannten Schneidplatte, die nicht nachteiliger ist, jedoch aus anderen Gründen eine Reihe von Vorteilen im Gefolge hat. So ist es auf einfache Weise möglich, in vorgegebene Rohlinge gewünschte Spanwinkel zu schleifen, d.h. eine entsprechende Anpassung an die Fräsanforderungen vorzunehmen. Hierzu sind bei vorgegebener Einspannung in der Schleifmaschine nur die Schleifparameter zu ändern, was völlig problemlos zu bewerkstelligen ist. Das Herstellungsverfahren führt im übrigen zu einer höheren Rundlaufgenauigkeit als dies bei gesinterten Wendeplatten möglich ist. Die erfindungsgemäße Umfangs-Fräswendeplatte ermöglicht mithin eine Präzision, wie sie bisher nur mit Schlichtfräsern (ohne Wendeplatten) erreichbar war. Bei der erfindungsgemäßen Wendeplatte läßt sich auch ein besonders vorteilhaftes, bei niedriger Temperatur durchführbares Beschichtungsverfahren anwenden, das, wie erwähnt, eine Schleifbearbeitung des Werkstücks voraussetzt.

Der Winkel, unter dem sich die Hohlkehle zur Schneidkante (des Rohlings) erstreckt, ist naturgemäß abhängig von dem gewünschten Spanwinkel, wobei die Schrägung mit der Steigung der Hohlkehle korreliert und ggf. mit dem Radius des Schleifwerkzeugs, mit dem die Hohlkehle erzeugt wird. Bei einem gegebenen Radius bestimmt die Schleiftiefe die Neigung der Spanfläche, wobei selbstverständlich dafür gesorgt werden muß, daß die Hohlkehle unter dem gewünschten Spanwinkel unmittelbar an die Schneidkante angrenzt. Die Vorgaben zur Herstellung der Hohlkehle sind jedoch nicht schwierig zu ermitteln. Es ist auch denkbar, die Tiefenzunahme der Hohlkehle nicht konstant veränderlich zu machen; für die Bearbeitung ist indessen von Vorteil, wenn diese annähernd konstant ist.

Falls ein über die Länge der Schneidkante konstanter Spanwinkel erwünscht ist, kann, wie bereits erwähnt, die Neigung der Spanfläche am voreilenden und nacheilenden Ende der Schneidkante so gewählt werden, daß bei einem vorgegebenen Axialwinkel diese Winkel einen gleichen Wert aufweisen. Die zwischen den Enden liegenden Spanwinkel haben dann nur geringfügig abweichende Werte.

Zur Erzeugung eines exakten 90°-Winkels sieht der eingangs beschriebene Stand der Technik vor, die Schneidkante auf dem Mantel eines Zylinders verlaufen zu lassen in Form einer Schnittlinie eines ebenen Schnitts durch den Zylinder nach Maßgabe des Axialwinkels. Hieraus resultiert eine elliptische Bombierung der Schneidkante, die sich theoretisch ebenfalls mit Hilfe einer Schleifmaschine herstellen ließe. Bei der Erfindung wurde indessen erkannt, daß ein derartiger Aufwand nicht notwendig ist, vielmehr ausreicht, wenn die Schneidkante eine gewisse Balligkeit erhält, wie sie jedoch grundsätzlich etwa aus der FR-A-2 276 892 bekanntgeworden ist. Diese Balligkeit kann nach einer Ausgestaltung der Erfindung dadurch erreicht werden, daß der an die Schneidkante angrenzende Abschnitt der Flanke (Freifläche) ballig geschliffen wird. Vorzugsweise wird die Flankenfläche mit einem relativ großen Radius kreisbogenförmig geschliffen. Es wurde festgestellt, daß die mit einer derartigen Schneidkante erzeugten Flächen in ausreichendem Maße einem idealen 90°-Winkel angenähert sind. Der Schleifprozeß ermöglicht ohne Mehraufwand eine beliebige Korrektur des Freiwinkels über die Schneidenlänge gesehen.

Zusammenfassend kann festgestellt werden, daß mit Hilfe der erfindungsgemäßen Umfangs-Fräswendeplatte eine hohe Rundlauf- und eine hohe Planlaufgenauigkeit erzielt wird und hochgenaue 90°-Flächen erreichbar sind. Außerdem ermöglicht sie einen großen Axialwinkel, was einen weichen Schnitt und eine gute Spanabfuhr zur Folge hat.

Die Erfindung wird nachfolgend anhand von Zeichnungen näher erläutert.
- Fig. 1: zeigt perspektivisch ein Fräswerkzeug mit drei Wendeplatten nach der Erfindung.
- Fig. 2: zeigt perspektivisch vergrößert einen Fräskopf ähnlich dem nach Fig. 1.
- Fig. 3: zeigt perspektivisch eine Wendeplatte der Fräswerkzeuge nach den Figuren 1 und 2.
- Fig. 4: zeigt eine Draufsicht auf die Wendeplatte nach Fig. 3.
- Fig. 5: zeigt eine Seitenansicht der Wendeplatte nach Fig. 4 in Richtung Pfeil 5.
- Fig. 6: zeigt einen Schnitt durch die Wendeplatte nach Fig. 4 entlang der Linie 6-6.
- Fig. 7: zeigt eine Seitenansicht der Wendeplatte nach Fig. 4 in Richtung Pfeil 7.

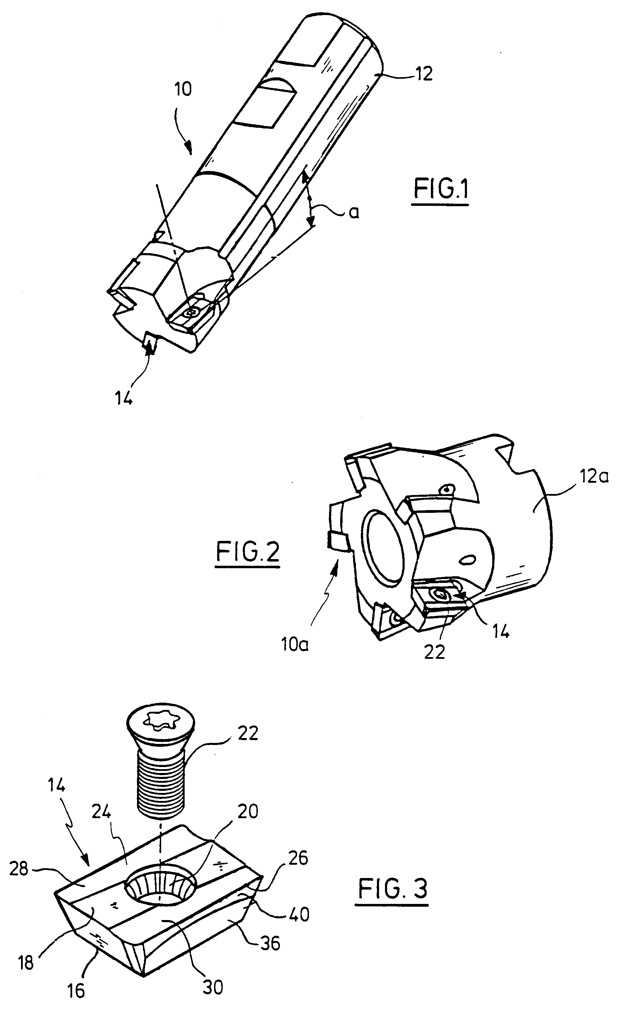

Fig. 1 zeigt ein Fräswerkzeug 10, bei dem in einem allgemein zylindrischen Halter 12 drei Fräswendeplatten 14 in geeigneter und bekannter Weise aufgenommen sind, und zwar unter einem Axialwinkel a.

Fig. 2 zeigt ein ähnliches Fräswerkzeug 10a, das fünf Wendeplatten 14 der in Fig. 1 gezeigten Art aufnimmt. Auf den Aufbau des Werkzeughalters 12 bzw. 12a und die Festlegung der Wendeplatten 14 wird im einzelnen nicht näher eingegangen, da sie zum Stand der Technik gehören.

Die Wendeplatten 14 sind aus einem trapezoiden, gesinterten Rohling hergestellt. Er weist eine plangeschliffene Auflagefläche 16 und eine plane parallel zur Auflagefläche 16 verlaufende Vorderfläche 18 auf. Die Wendeplatte 14 weist mittig einen im Querschnitt kreisförmigen Durchgang 20 auf zur Aufnahme einer Halteschraube 22 zwecks Festlegung der Wendeplatte 14 im Werkzeughalter 10 bzw. 10a in bekannter Art und Weise.

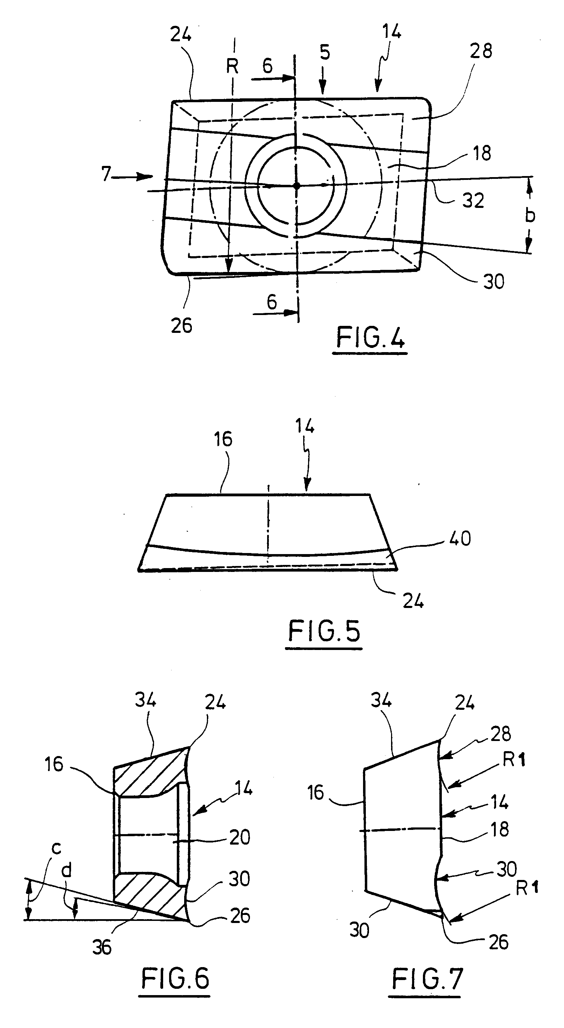

Die Wendeplatte 14 weist auf gegenüberliegenden Seiten Schneidkanten 24, 26 auf. Die Schneidkanten werden zum einen gebildet durch die angrenzenden Flächen einer Hohlkehle 28 bzw. 30, die in die Vorderfläche 18 eingeformt sind sowie zum anderen einer Freifläche 40. Die Hohlkehlen erstrecken sich in einem Winkel b zur Schneidkante 24 bzw. 26 bzw. zur Achse der Wendeplatte 14, die mit 32 bezeichnet ist. Die Hohlkehlen 28, 30 sind mit einem Schleifwerkzeug hergestellt, so daß sich über die Länge im Querschnitt ein konstanter Radius R1 ergibt. Aufgrund des Schrägwinkels und der unterschiedlichen Tiefe der Hohlkehlen 28, 30 ergibt sich ein unterschiedlicher Keilwinkel mit der Flanke 34 bzw. 36 der Wendeplatte 14. Wie insbesondere aus Fig. 7 hervorgeht, hat die Hohlkehle an einem Ende die maximale Tiefe und verringert ihre Tiefe stetig zum anderen Ende hin. Die Hohlkehlen 28, 30 sind spiegelbildlich geformt, damit beide Schneidkanten 24, 26 nacheinander durch ein entsprechendes Wenden der Platte zum Einsatz kommen können.

Bei einem gegebenen Radius R1 des Schleifwerkzeugs und der gewählten Tiefe der Hohlkehle 28 bzw. 30 läßt sich mithin über die Länge der Schneidkante 24 bzw. 26 eine sich stetig in der Neigung verändernde Spanfläche erzeugen. Bei eingespannter Wendeplatte 14 liegt das den tieferen Nutabschnitt aufweisende Ende der Schneidkante am voreilenden Ende, während der flache Nutabschnitt am nacheilenden Ende liegt. Dadurch wird bei vorgegebenen Axialwinkel und vorberechnetem Winkel am voreilenden und am nacheilenden Ende über die Länge der Schneidkante 24 bzw. 26 ein annähernd konstanter Spanwinkel erhalten.

Wie aus den Figuren 3 bis 7 ferner hervorgeht, ist der an die Schneidkante 24 bzw. 26 angrenzende Abschnitt 40 ballig geschliffen. Der Anschliff, der in der gleichen Maschine und in der gleichen Einspannung wie beim Schleifen der ebenen Flächen 34 und 36 erfolgen kann, findet mit einem relativ großen Radius R statt (Fig. 4). Dadurch ergibt sich in der Ebene der Vorderfläche 18 der Wendeplatte 14 eine schwach konvex gewölbte Schneidkante 24, 26, sowie die Freifläche 40, die in gleicher Aufspannung auch eine stetige Veränderung des Freiwinkels d erfährt (Fig. 6); der Freiwinkel der ebenen Flächen 34, 36 ist in Fig. 6 mit c bezeichnet). Die Balligkeit ermöglicht eine ausreichend präzise 90°-Fläche, wenn auch die Schneidkante 24 bzw. 26 nicht völlig exakt auf einem Zylindermantel liegt, sondern lediglich angenähert.

Wie bereits erwähnt, erfolgt das Schleifen der balligen Flächen in einer Aufspannung im Anschluß an das Schleifen der Anlageflächen 34, 36. Nach dem Formgebungsverfahren kann die Wendeplatte 14 mit Hilfe bekannter Beschichtungsverfahren mit einem geeigneten Material beschichtet werden zwecks Erhöhung der Oberflächenfestigkeit.

## Patentansprüche

1. Umfangsfräswendeplatte (14), die unter einem von Null verschiedenen Axialwinkel (a) an einem drehbaren Werkzeughalter (12, 12a) befestigbar ist und die von einem trapezoiden gesinterten Körper gebildet ist, mit einer im wesentlichen planen Auflagefläche (16) einer dieser gegenüberliegenden, im wesentlichen planen Vorderfläche (18) und mit zwischen diesen ausgebildeten Seitenflächen sowie mit wenigstens zwei diametral gegenüberliegenden Schneidkanten (24, 26) mit zugeordneten Spanflächen und an diesen angrenzenden Freiflächen (40), wobei die Spanflächen von je einer in die Vorderseite eingearbeiteten Hohlkehle (28, 30) und die Freifläche von je einer Seitenfläche gebildet sind, dadurch gekennzeichnet, daß die gerade Hohlkehle (28, 30) unter einem spitzen, sich vom voreilenden zum nacheilenden Ende des Körpers hin öffnenden Winkel (b) zur Längsmittelachse (32) des Körpers verläuft, mit vom nacheilenden zum voreilenden Ende des Körpers hin stetig zunehmender Tiefe, wobei die Hohlkehle (28, 30) über ihre Länge im Querschnitt einen im wesentlichen konstanten Krümmungsradius (R₁) aufweist.

2. Umfangsfräswendeplatte nach Anspruch 1, dadurch gekennzeichnet, daß sich die Hohlkehle (28, 30) im Winkel (b) von 5 bis 10° relativ zur Achse des Körpers erstreckt.

3. Umfangsfräswendeplatte nach Anspruch 1 oder 2, dadurch gekennzeichnet, daß die Tiefenzunahme der Hohlkehle (28, 30) annähernd konstant ist.

4. Umfangsfräswendeplatte nach einem der Ansprüche 1 bis 3, dadurch gekennzeichnet, daß der Winkel (b), die Tiefenzunahme der Hohlkehle (28, 30) und der Krümmungsradius (R₁) so aufeinander abgestimmt sind, daß bei vorgegebenem Axialwinkel (a) der Spanwinkel am voreilenden und nacheilenden Ende gleich ist.

5. Umfangsfräswendeplatte nach einem der Ansprüche 1 bis 4, dadurch gekennzeichnet, daß der an die Schneidkante (24, 26) angrenzende Abschnitt (40) der Flanken (34, 36) ballig geschliffen ist dergestalt, daß die Schneidkante (24, 26) in einer in der Vorderfläche (18) liegenden Ebene schwach konvex ist und die Schneidkante (24, 26) im montierten Zustand einen etwa konstanten Freiwinkel aufweist.

6. Umfangsfräswendeplatte nach Anspruch 5, dadurch gekennzeichnet, daß die ballige Flankenfläche (40) mit einem relativ großen Radius (R) kreisbogenförmig geschliffen ist.

7. Umfangsfräswendeplatte nach einem der Ansprüche 1 bis 6, dadurch gekennzeichnet, daß die Hohlkehle (28, 30) in einen plangeschliffenen, trapezoiden Rohling eingearbeitet ist.

## Claims

1. An indexable milling cutting insert (14) which is adapted to be mounted to a tool holder (12,12a) under an axial angle (a) different from zero and which comprises a trapezoidal sintered body, including a substantially planar mounting face (16), a substantially planar front face (18) opposite said mounting face, and opposing side faces formed therebetween, and at least a pair of opposite cutting edges (24,26) having associated chip surfaces and clearance surfaces (40) adjacent thereto, said chip surfaces being formed by respective linear grooves (28,30) machined in the front face and each clearance surface being comprised of a side face, characterized in that the linear groove (28,30) extends under an acute angle (b) opening from the trailing end towards the leading end of the body with respect to the longitudinal central axis of the body and being of a depth continuously increasing from the trailing end towards the leading end of the body, said groove (28,30) being of a cross-section having a substantially constant radius of curvature (R₁) throughout its length.

2. An indexable milling cutting insert according to claim 1, characterized in that the groove (28,30) extends under an angle of 5° to 10° with respect to the axis of the body.

3. An indexable milling cutting insert according to claim 1 or claim 2, characterized in that the depth of the groove (28,30) increased approximately constantly.

4. An indexable milling cutting insert according to any of claims 1 to 3, characterized in that the angle (b), the increase of depth of the groove (28,30) and the radius of curvature (R₁) are matingly selected such that the chip angles at the leading and trailing ends are the same for any predetermined axial angle (a),

5. An indexable milling cutting insert according to any of claims 1 to 4, characterized in that the portion (40) of the flanks (34,36) adjacent the cutting edge (24,26) are ground in a spherical configuration such that the cutting edge (24,26) is slidely convex in the plane of the front face (18) and the cutting edge (24,26) has a substantially constant clearance angle when it is in its assembled condition.

6. An indexable milling cutting insert according to claim 5, characterized in that the spherical flank surface (40) is ground in a circular arc of a relatively large radius (R).

7. An indexable milling cutting insert according to any of claims 1 to 6, characterized in that the groove (28,30) is machined into a planar, trapezoidal blank.

## Revendications

1. Plaquette de coupe réversible (14) pour fraisage tangentiel, susceptible d'être fixée sur un porte-outil tournant (12, 12a) avec un angle axial (a) différent de zéro, et formée d'un corps fritté trapézoïdal, comportant une face d'appui (16) essentiellement plane, une face avant (18), située du côté opposé et essentiellement plane, et des faces latérales situées entre ces faces avant et arrière, ainsi qu'au moins deux arêtes de coupe (24, 26), diamétralement opposées, comportant des surfaces d'attaque correspondantes et des surfaces de dépouille (40) en limite de ces dernières, étant entendu que les surfaces d'attaque sont formées chacune par une gorge concave (28, 30), usinée dans la face avant, et que les surfaces de dépouille sont chacune formées par une face latérale,
caractérisée en ce que
la gorge concave (28, 30), rectiligne, a une direction formant, par rapport à l'axe médian longitudinal du corps, un angle aigu (b) s'ouvrant de l'extrémité du corps située en avant vers son extrémité située en arrière, avec une profondeur croissant constamment de l'extrémité située du corps en arrière vers son extrémité située en avant, étant entendu que la gorge concave rectiligne (28, 30) présente, en section, sur toute sa longueur, un rayon de courbure (R1) essentiellement constant.

2. Plaquette de coupe suivant la revendication 1, caractérisée en ce que la gorge concave (28, 30) a une direction formant un angle (b) de 5 à 10° par rapport à l'axe du corps.

3. Plaquette de coupe suivant la revendication 1 ou la revendication 2, caractérisée en ce que l'augmentation de profondeur de la gorge concave (28, 30) est sensiblement constante.

4. Plaquette de coupe suivant l'une des revendications 1 à 3, caractérisée en ce que l'angle (b), l'augmentation de profondeur de la gorge concave (28, 30) et le rayon de courbure (R1) sont déterminés les uns par rapport aux autres de telle façon que, pour un angle axial (a) donné, l'angle de coupe soit le même à l'extrémité située en avant et à l'extrémité située en arrière.

5. Plaquette de coupe suivant l'une des revendications 1 à 4, caractérisée en ce que la partie (40) des flancs (34, 36) qui est située en limite de l'arête de coupe (24, 26), est meulée avec une forme bombée, de telle façon que l'arête de coupe (24, 26) soit faiblement convexe dans un plan situé dans la face avant (18), et que l'arête de coupe (24, 26) présente, après son montage, un angle de dépouille sensiblement constant.

6. Plaquette de coupe suivant la revendication 5, caractérisée en ce que la surface bombée (40) des flancs est meulée en arc de cercle, avec un rayon (R) relativement grand.

7. Plaquette de coupe suivant l'une des revendications 1 à 6, caractérisée en ce que la gorge concave (28, 30) est usinée dans une ébauche trapézoïdale, meulée plane.
